(19) Europäisches Patentamt
European Patent Office
Office européen des brevets

(11) EP 2 965 635 B1

# (12) EUROPEAN PATENT SPECIFICATION

(45) Date of publication and mention of the grant of the patent:
**31.10.2018 Bulletin 2018/44**

(21) Application number: **14760538.0**

(22) Date of filing: **04.03.2014**

(51) Int Cl.:
*A23F 3/16 (2006.01)*

(86) International application number:
**PCT/JP2014/055512**

(87) International publication number:
**WO 2014/136797 (12.09.2014 Gazette 2014/37)**

## (54) LIGHT-COLOURED TEA BEVERAGE

HELLES TEEGETRÄNK

BOISSON À BASE DE THÉ LÉGÈREMENT COLORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**04.03.2013 JP 2013042412**
**04.03.2013 JP 2013042415**
**04.03.2013 JP 2013042422**
**04.03.2013 JP 2013042423**
**04.03.2013 JP 2013042424**

(43) Date of publication of application:
**13.01.2016 Bulletin 2016/02**

(73) Proprietor: **Suntory Holdings Limited**
**Kita-ku, Osaka-shi**
**Osaka 530-8203 (JP)**

(72) Inventors:
- **KOBAYASHI, Shinichi**
  **Kawasaki-shi**
  **Kanagawa 211-0067 (JP)**
- **FURUTA, Hiroki**
  **Kawasaki-shi**
  **Kanagawa 211-0067 (JP)**
- **SENGA, Yoshinori**
  **Kawasaki-shi**
  **Kanagawa 211-0067 (JP)**
- **IBUSUKI, Daigo**
  **Kawasaki-shi**
  **Kanagawa 211-0067 (JP)**

(74) Representative: **Vossius & Partner**
**Patentanwälte Rechtsanwälte mbB**
**Siebertstrasse 3**
**81675 München (DE)**

(56) References cited:
**EP-A1- 2 095 727**
**EP-A1- 2 143 344**
**WO-A1-2011/092976**
**WO-A1-2012/029132**
**WO-A1-2012/111820**
**JP-A- 2006 174 801**
**JP-A- 2008 131 875**
**JP-A- 2011 505 816**
**JP-A- 2012 183 064**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 965 635 B1

**Description**

TECHNICAL FIELD

The present invention relates to a packaged green tea beverage obtained by packing, in a container like a PET bottle or a can, a green tea beverage comprising a liquid green tea extract from green tea leaves as a main component.

BACKGROUND ART

Packaged tea beverages which are filled in containers, and distributed and sold on the market for a long time had been conventionally packed predominantly in non-recappable cans, but in recent years, the market for beverages packed in recappable bottles, *i.e.*, plastic bottles (PET bottles) which allow leftovers to be preserved, has been growing for the sake of consumer convenience. The color tone of tea beverages is an important factor for palatability and quality, and suppressing change in color tone such as discoloration of tea beverages is a key challenge for beverages packed in transparent containers such as plastic bottles.

Vitamin C or a salt thereof, which are commonly incorporated in packaged tea beverages, is said to have some effect on the stabilization of color tone under light irradiation or other similar conditions. Also, there has been proposed a green tea beverage with stable color tone which comprises 1,5 to D-anhydrofructose (Patent Literature 1).

Patent Literature 2 relates to a specific method for manufacturing ingredient for a tea drink, wherein the ingredient for a tea drink is manufactured by a method comprising the steps of impregnating the ingredient for a tea drink into an amino-acid-solution-containing solution that contains one or more amino acids selected from the group consisting of leucine, valine, and isoleucine, and heating the tea leaves at a temperature of 100 to 200°C.

Patent Literature 3 relates to a concentrated beverage composition for reconstitution, comprising the following ingredients (A), (B) and (C): (A) from 0.5 to 25.0 wt% of non-polymer catechins, (B) a carbohydrate, and (C) a hydroxycarboxylic acid, wherein the composition meets the following conditions (D) and (E) as well as at least one condition selected from the following conditions (F1), (F2) and(F3): (D) a content of gallic acid is lower than 0.6 wt%, (E) a percentage of non-epi-forms in the non-polymer catechins is from 5 to 25 wt%, (F1) a Brix degree is from 20 to 70, and when diluted with deionized water to give a non-polymer catechin concentration of 0.13 wt%, a pH is from 2.5 to 6.0. (F2) a solid content is not lower than 70.0 wt%, and when diluted with deionized water to give a non-polymer catechin concentration of 0.13 wt%, a pH is from 2.5 to 6.0. and (F3) an absorbance at 400 nm is smaller than 0.5 and a pH is from 2.5 to 6.0, when diluted with deionized water to give a non-polymer catechin concentration of 0.13 wt%.

Patent Literature 4 relates to a packaged beverage, comprising: (A) from 0.06 to 0.5 % by mass of non-polymer catechins; (B) from 0.01 to 5.0 % by mass of at least one amino acid selected from L-isoleucine, L-leucine, L-valine, L-threonine, DL-methionine, L-methionine, L-histidine, L-phenylalanine. L-lysine, L-tryptophan, L-aspartic acid, L-glutamic acid, L-alanine, DL-alanine, glycine, L-asparagine, L-glutamine, L-arginine, L-serine, L-tyrosine, L-cystine and L-proline, or a salt thereof; and (C) from 0.0001 to 20 % by mass of a sweetener, wherein (G) a percentage of gallate bodies in the non-polymer catechins is from 5 to 55 % by mass, and pH is from 2.5 to 5.1.

CITATION LIST

PATENT LITERATURE

Patent Literature 1: Japanese Patent No. JP 4287583

Patent Literature 2: WO 2012/111820 A1

Patent Literature 3: EP 2 143 344 A1

Patent Literature 4: EP 2 095 727 A1

SUMMARY OF INVENTION

TECHNICAL PROBLEM

Green tea beverages comprising a liquid green tea extract from green tea leaves as a main component are brown in appearance in themselves, and have drawbacks in that they are lacking in a refreshing sensation in a visual

sense, and that they change their color tone during hot storage or long-term storage. At the present, when transparent containers such as PET bottles are preferred, it is desirable to provide some form of adequate solution for these problems.

The present invention has as its object to provide a beverage that is stable in terms of color tone and savor even during hot storage or long-term storage.

SOLUTION TO PROBLEM

In order to solve the aforementioned problems, the present inventors have made intensive studies, and as a result, found that green tea beverages having their colorimetric lightness and chroma adjusted to be in specified ranges give a refreshing sensation in a visual sense and are stable in terms of color tone against storage. The inventors also found that the storage stability in terms of color tone and savor is surprisingly enhanced by incorporating specified amounts of an ascorbic acid and valine, an amino acid known to have bitterness, in such a green tea beverage having its lightness and chroma adjusted to specified ranges; thus, the inventors have completed the present invention.

More specifically, the present invention refers to:

(1) A packaged green tea beverage satisfying the following requirements:

(i) comprising 100 to 800 ppm of an ascorbic acid (A);
(ii) comprising 1 to 200 ppm of valine (B1);
(iii) having a colorimetric lightness (L*) of $75 \leq L^* \leq 95$;
(iv) having a colorimetric chroma (C*) of $15 \leq C^* \leq 25$;
(v) comprising raffinose (G1) and stachyose (G2) in a total amount of not smaller than 10 ppm and not greater than 100 ppm.

(2) The beverage as set forth in (1), comprising less than 6 ppm of methionine (B2).
(3) The beverage as set forth in (1) or (2), comprising 2.0 to 18 mg/100 mL of phosphoric acid (D).
(4) The beverage as set forth in (3), further comprising 3 to 100 ppb of linalol (F1).
(5) The beverage as set forth in (1) or (2), comprising 2.8 to 10 ppb of linalol (F1) and 0.2 to 1.0 ppb of phenylacetaldehyde (F2).

In one mode, the present disclosure includes the following.

(1) A packaged green tea beverage comprising 100 to 800 ppm of an ascorbic acid and 1 to 200 ppm of valine, and having a colorimetric lightness (L*) and chroma (C*) satisfying the following:

(i) $75 \leq L^* \leq 95$;
(ii) $15 \leq C^* \leq 25$.

(2) The packaged green tea beverage as set forth in (1), wherein the green tea beverage is obtained by incorporating a pulverized green plant product in a liquid green tea extract.
(3) The packaged green tea beverage as set forth in (2), wherein the pulverized green plant product is a pulverized green tea leaf product.
(4) The green tea beverage as set forth in any of (1) to (3), wherein the valine is incorporated in the form of a green tea leaf extract.

In one mode, the present disclosure includes the following.

(1) A packaged green tea beverage comprising 100 to 800 ppm of an ascorbic acid and 0.5 to 6 ppm of methionine, and having a colorimetric lightness (L*) and chroma (C*) satisfying the following:

(i) $75 \leq L^* \leq 95$;
(ii) $15 \leq C^* \leq 25$.

(2) The packaged green tea beverage as set forth in (1), wherein the green tea beverage is obtained by incorporating a pulverized green plant product in a liquid green tea extract.
(3) The packaged green tea beverage as set forth in (2), wherein the pulverized green plant product is a pulverized green tea leaf product.

In another mode, the present disclosure includes the following.

(1) A packaged green tea beverage comprising 2.0 to 18 mg/100 mL of phosphoric acid, and having a colorimetric lightness (L*) and chroma (C*) satisfying the following:

(i) $75 \leq L^* \leq 95$;
(ii) $15 \leq C^* \leq 25$.

(2) The packaged green tea beverage as set forth in (1), comprising 3 to 100 ppb of linalol.

In another mode, the present disclosure includes the following.

(1) A packaged green tea beverage comprising 0.2 to 1.0 ppb of phenylacetaldehyde and 2.8 to 10 ppb of linalol, and having a colorimetric lightness (L*) and chroma (C*) satisfying the following:

(i) $75 \leq L^* \leq 95$;
(ii) $15 \leq C^* \leq 25$.

In another mode, the present disclosure includes the following.

(1) A packaged green tea beverage comprising raffinose and stachyose in a total amount of not smaller than 10 ppm, and having a colorimetric lightness (L*) and chroma (C*) satisfying the following:

(i) $75 \leq L^* \leq 95$;
(ii) $15 \leq C^* \leq 25$.

(2) The packaged green tea beverage as set forth in (1), wherein the raffinose and stachyose are incorporated in the form of a liquid green tea extract.

ADVANTAGEOUS EFFECTS OF INVENTION

According to the present invention, there is provided a green tea beverage giving a refreshing sensation both in a visual sense and in terms of savor, and having satisfactory storage stability in terms of savor and color tone.

DESCRIPTION OF EMBODIMENTS

(An ascorbic acid)

The packaged green tea beverage of the present invention has an ascorbic acid (herein also referred to as "(A)") incorporated therein for the purpose of stabilization of color tone during long-term storage. For the purpose of this invention, the term "an ascorbic acid" refers to one or more of ascorbic acid, its isomers, derivatives thereof, and salts of the foregoing. Such an ascorbic acid that can be used in this invention can be of any type as long as it can be incorporated in beverages. Specific examples include ascorbic acid; ascorbic acid isomers such as erythorbic acid; derivatives of the ascorbic acid isomers, such as ascorbic acid 2,6-dipalmitate, ascorbic acid 6-stearate, sodium ascorbate-diphosphate, disodium ascorbate-disulfate, ascorbic acid 2-glucoside, glucosamine ascorbate, L-dehydroascorbic acid, ascorbic acid 6-palmitate, L-ascorbyl tetraisopalmitate, ascorbyl tetra-2-hexyldecanoate, and L-ascorbyl magnesium phosphate; as well as salts of the ascorbic acid and the ascorbic acid derivatives, including: salts thereof with an alkali metal such as sodium and potassium; salts thereof with an alkali earth metal such as calcium, magnesium, and barium; basic amino acid salts such as arginine and lysine; ammonium salts such as ammonium salt and tricyclohexylammonium salt; alkanolamine salts such as monoisopropanolamine salt, diisopropanolamine salt, and triisopropanolamine salt. Among the above examples, ascorbic acid, erythorbic acid, and salts thereof are preferably used, and sodium ascorbate and sodium erythorbate are more preferably used.

The content of such an ascorbic acid in the packaged beverage, which is required for stabilization during storage, is in the range of about 100 to 800 ppm, preferably about 150 to 700 ppm, more preferably 200 to 600 ppm.

(Valine)

In addition to such an ascorbic acid as described above, the green tea beverage of the present invention

comprises valine (herein also referred to as "(B1)") as a free amino acid.

Examples of the valine that can be used in the present invention include commercially available valine products, synthetic valine products, and other edible valine products regardless of their production method. D-, L-, and DL-isomers of valine can also be used, with the L-isomer thereof being most preferably used. Specific examples of the L-isomer thereof include L-valines produced by a fermentation or synthesis method.

Plants and plant extracts containing L-valine can also be used as they are or in a purified form (including a coarsely purified form). The L-valine-containing plants can be exemplified by a pulverized green tea leaf product. The L-valine-containing plant extracts can be preferably exemplified by a green tea leaf extract. Addition of L-valine in the form of a pulverized green tea leaf product or a green tea leaf extract is advantageous in that this makes it possible to simply produce a tea beverage having natural palatability solely on the basis of tea-derived components without the use of an additive (excluding an antioxidant).

In general, a green tea leaf extract is rich in amino acids such as theanine, glutamic acid, asparatic acid, and methionine, but is poor in valine. Thus, in the process of using a green tea leaf extract, it is preferable to subject green tea leaves to physical or chemical treatment to increase the concentration of valine. Such a treatment method is specifically exemplified by a treatment method in which green tea leaves as a source material are impregnated with an aqueous solution containing valine, and the impregnated leaves are dried by roasting (refer to Japanese Patent Application Publication No. JP 2012-183064). A mode of the invention, in which the valine is incorporated in the form of a green tea leaf extract obtained by impregnating green tea leaves as a source material with an aqueous solution containing valine and drying the impregnated leaves by roasting at a temperature of 100 to 200°C, is one of preferred modes of this invention. The use of this green tea leaf extract obtained by impregnation with valine and drying by roasting imparts a roasted aroma as well as stability in terms of savor to the green tea beverage of the present invention.

The green tea beverage of the present invention comprises valine at a concentration of 1.0 to 200 ppm, preferably 3.0 to 100 ppm, more preferably 5.0 to 50 ppm, based on the total amount of the beverage. Incorporation of valine at a concentration within the aforementioned range leads to a dramatic improvement in the stability in terms of color tone and savor of the inventive beverage. It is presumed that the presence of a specified amount of valine may improve the stability of an ascorbic acid in the beverage.

In addition to storage stability, the incorporation of valine improves a refreshing sensation in terms of savor, which is given by a packaged green tea beverage produced through heat sterilization. This is presumed to be because valine may be capable of suppressing the occurrence of, or effectively masking, an uncomfortable retort odor associated with heat sterilization.

(Color tone)

The green tea beverage of the present invention is characterized by its color tone. According to the studies made by the present inventors, it was found that the change in the color tone of a green tea beverage is closely related to chroma ($C^*$), and that a green tea beverage satisfying a chroma of $15 \leq C^* \leq 25$ (preferably $15 \leq C^* \leq 23$, more preferably $15 \leq C^* \leq 21$) has stability in terms of the color tone of the liquid color. For the purpose of this invention, the "chroma ($C^*$)" refers to the saturation of color, in other words the sense of color vividness, and is expressed by numerical values ranging from 0 to 100 (a smaller value represents a duller color, while a greater value represents a more vivid color). The chroma ($C^*$) can be calculated by measuring $L^*$, $a^*$, and $b^*$ values with a colorimeter and applying the measured values to the following equation.

$$\text{Equation:} \quad C^* = (a^{*2} + b^{*2})^{1/2}$$

Among green tea beverages showing a $C^*$ value within the aforementioned range, those satisfying a lightness ($L^*$) of $75 \leq L^* \leq 95$ (preferably $75 \leq L^* \leq 90$) are capable of giving a refreshing sensation even in a visual sense. A green tea beverage showing a $L^*$ value of smaller than 75 will be suggestive of a robust and heavy taste from its hue, and will hardly evoke a refreshing sensation. As referred to herein, the "lightness ($L^*$)" refers to the sense of color brightness, and is expressed by numerical values ranging from 0 to 100 (0: black, 100: white).

The inventive green tea beverage characterized by comprising specified amounts of an ascorbic acid and valine as defined in claim 1 and comprising raffinose (G1) and stachyose (G2) in a total amount of not smaller than 10 ppm and not greater than 100 ppm, and by having a lightness ($L^*$) and chroma ($C^*$) adjusted to the aforementioned ranges shows its natural color tone, even when provided as a packaged green tea beverage. Also, the inventive beverage can maintain its natural color tone giving a refreshing sensation, even during hot storage or long-term storage.

The inventive green tea beverage satisfying a specified color tone ($75 \leq L^* \leq 95$, $15 \leq C^* \leq 25$) can be easily produced by one skilled in the art through selecting and using the type and processing method of tea leaves as appropriate. An exemplary method for achieving this is to incorporate a pulverized green plant product in a liquid green tea extract

from green tea leaves so as to give desired L* and C* values. As the pulverized green plant product, it is preferred to use a pulverized product of a plant having a dark green color, more specifically a pulverized product of green tea leaves. The particle shape and size of the pulverized green tea product is not particularly limited as long as the pulverized product has a tea leaf tissue like the cases of *Matcha* (powdered green tea) and *Kona-cha* (dust tea). However, from the viewpoints of ease of use upon production of tea beverages, dispersibility, etc., it is preferred to use a pulverized green tea product having an average particle size of about 1 to 100 $\mu$m, preferably about 5 to 50 $\mu$m. The green tea leaves for use as a source material of a pulverized product are produced by a non-fermented tea production process using the leaves, stems, etc. of the tea plant of the genus *Camellia.* Generally, there is no particular limitation to the green tea leaves to be used, as long as they are classified as non-fermented tea leaves, and the green tea leaves are not limited by non-essential differences, such as the species and site of tree, and tea production process. One or more types of green tea leaves can be selected, as appropriate, from various types of green tea leaves including *Sencha*, *Gyokuro*, *Tencha*, and *Kabusecha*, and can be used alone or in combination.

(Other components)

The green tea extract giving origin to valine (B1) contains methionine (herein also referred to as (B2)), though in trace amounts. According to the studies made by the present inventors, it was found that the presence of methionine interferes with the effects of valine in the present invention. Thus, it is preferred that selection of the tea leaves to be used to produce a tea extract and adjustment of extraction conditions should be made so as to reduce the content of methionine in the inventive tea beverage. More specifically, the content of methionine is adjusted to less than 6 ppm, preferably 5 ppm, more preferably 4 ppm, based on the total amount of the tea beverage. However, since the presence of methionine in trace amounts may contribute to imparting stability to an ascorbic acid in the beverage, the minimum methionine content is not zero but approximately not less than 0.5 ppm, preferably not less than 0.6 ppm, more preferably not less than 0.7 ppm. If the methionine content is within the aforementioned range, a dramatic improvement in the stability in terms of color tone and savor will be achieved, but if the methionine content exceeds 6 ppm, the odor peculiar to the sulfur-containing amino acid, methionine, will get stronger, thereby impairing a refreshing sensation.

Hence, the present invention is a packaged green tea beverage satisfying the following requirements:

(i) comprising 100 to 800 ppm of an ascorbic acid (A);
(ii) comprising 1 to 200 ppm of valine (B1) and less than 6 ppm of methionine (B2);
(iii) having a colorimetric lightness (L*) of $75 \le L^* \le 95$;
(iv) having a colorimetric chroma (C*) of $15 \le C^* \le 25$;
(v) comprising raffinose (G1) and stachyose (G2) in a total amount of not smaller than 10 ppm and not greater than 100 ppm.

The present inventors also found that incorporation of phosphoric acid (herein also referred to as "(D)") at a subthreshold concentration selectively enhances the aroma of a light-colored tea with light hue, and improves the storage stability in terms of savor. To be specific, the presence of phosphoric acid enhances the invigorating green-leaf aroma characteristic of green tea leaves, thereby masking a retort odor and suppressing a loss or deterioration of the aroma during storage. As referred to herein, the "invigorating green-leaf aroma" refers to at least one aroma component among linalol, linalol oxide, geraniol, and phenylacetaldehyde. At least one component among linalol, linalol oxide, geraniol and phenylacetaldehyde is preferably contained, and all of these components are more preferably contained. In particular, a mode in which 3 to 100 ppb of linalool is contained is one of preferred modes of the present invention.

Even when phosphoric acid is incorporated, it is important to adjust the pH of the inventive tea beverage at 20°C to be in the range of 5.0 to 7.0, preferably 5.5 to 7.0, more preferably 5.5 to 6.5. Setting the pH to be in the aforementioned range helps selective enhancement of the invigorating green-leaf aroma, which is an effect of the present invention.

The total content of phosphoric acid in the inventive green tea beverage is in the range of 2.0 to 18 mg/100 mL, preferably 2.5 to 5 mg/100 mL. If the total phosphoric acid content exceeds 18 mg/100 mL, the acidity of phosphoric acid may interfere with the enhancement effect on the green-leaf aroma. No enhancement effect expected in the present invention can be obtained in the presence of less than 2.0 mg/100 mL of phosphoric acid.

Examples of the phosphoric acid that can be used include commercially available phosphoric acid products, synthetic phosphoric acid products, and other edible phosphoric acid products regardless of their production method. Plants and plant extracts containing phosphoric acid can also be used as they are or in a purified form (including a coarsely purified form). Phosphoric acid is reported to be present in *Gyokuro* at higher levels than in *Sencha* (refer to Non-patent Literature 1: Tea Research Journal, no. 93, p. 26-33 (2002)). As the phosphoric acid in the inventive beverage, the one derived from such a tea extract is contained.

Hence, one of preferred modes of the present invention is a packaged green tea beverage satisfying the

following requirements:

(i) comprising 100 to 800 ppm of an ascorbic acid (A);
(ii) comprising 1 to 200 ppm of valine (B1);
(iii) comprising 2.0 to 18 mg/100 mL of phosphoric acid (D);
(iv) having a colorimetric lightness (L*) of 75 ≤ L* ≤ 95;
(v) having a colorimetric chroma (C*) of 15 ≤ C* ≤ 25;
(vi) comprising raffinose (G1) and stachyose (G2) in a total amount of not smaller than 10 ppm and not greater than 100 ppm.

A more preferred mode is a packaged green tea beverage satisfying the following requirements:

(i) comprising 100 to 800 ppm of an ascorbic acid (A);
(ii) comprising 1 to 200 ppm of valine (B1);
(iii) comprising 2.0 to 18 mg/100 mL of phosphoric acid (D);
(iv) comprising 3 to 100 ppb of linalol (F1);
(v) having a colorimetric lightness (L*) of 75 ≤ L* ≤ 95;
(vi) having a colorimetric chroma (C*) of 15 ≤ C* ≤ 25;
(vii) comprising raffinose (G1) and stachyose (G2) in a total amount of not smaller than 10 ppm and not greater than 100 ppm.

In the meantime, the present inventors found that, as a solution against the problem where heat treatments such as retort sterilization cause a loss or deterioration of the high-quality aroma and flavor of green tea beverages, notably light-colored green tea beverages, incorporating trace amounts of linalol (F1) and phenylacetaldehyde (F2) at specified concentrations enhances the aroma of tea without giving a feeling of strangeness, and improves the storage stability of light-colored tea beverages in terms of savor and color tone. To be specific, subthreshold concentrations of linalol (F1 = 2.8 to 10 ppb) and phenylacetaldehyde (F2 = 0.2 to 1.0 ppb) are incorporated. In particular, incorporating these components at a relative ratio (by weight) ((F1)/(F2)) of 5 to 50, preferably 9 to 25, leads to an improvement in the aroma (*e.g.*, initial aroma (an aroma spreading in the oral cavity when a beverage is put into the mouth); retronasal aroma (a lingering aroma sensed after a beverage is swallowed)), taste (kokumi), and palatability (balance between taste and aroma) of tea beverages. A green tea beverage comprising these components at a ratio within the aforementioned range will be rich in sweet aroma and give a perceivable degree of full body filled with sweetness and umami. A beverage with too low a (F1)/(F2) ratio will lack freshness, whereas a beverage with too high a (F1)/(F2) ratio will be so emphasized only in terms of its floral fragrance that it may create a feeling of strangeness as a tea beverage.

The linalol (F1) and phenylacetaldehyde (F2) are incorporated in the tea beverage preferably in the form of a green tea extract. Incorporating these components in the form of a green tea extract imparts a more natural taste to the tea beverage. The contents of aroma components in a tea beverage can be quantified using gas chromatography with mass spectrometry (GC/MS).

Incorporating the phosphoric acid described above in such a tea beverage comprising specified amounts of linalol and phenylacetaldehyde leads to an additive or synergistic enhancement of the aroma and flavor of a tea beverage with low catechin content. In this case, a preferred phosphoric acid content in a tea beverage is in the range of 2.0 to 15 mg/100 mL, more preferably 2.5 to 5 mg/100 mL.

Hence, one of preferred modes of the present invention is a packaged green tea beverage satisfying the following requirements:

(i) comprising 100 to 800 ppm of an ascorbic acid (A);
(ii) comprising 1 to 200 ppm of valine (B1);
(iii) comprising 2.8 to 10 ppb of linalol (F1) and 0.2 to 1.0 ppb of phenylacetaldehyde (F2);
(iv) having a colorimetric lightness (L*) of 75 ≤ L* ≤ 95;
(v) having a colorimetric chroma (C*) of 15 ≤ C* ≤ 25;
(vi) comprising raffinose (G1) and stachyose (G2) in a total amount of not smaller than 10 ppm and not greater than 100 ppm.

A more preferred mode is a packaged green tea beverage satisfying the following requirements:

(i) comprising 100 to 800 ppm of an ascorbic acid (A);
(ii) comprising 1 to 200 ppm of valine (B1);
(iii) comprising 2.0 to 15 mg/100 mL of phosphoric acid (D);

(iv) comprising 2.8 to 10 ppb of linalol (F1) and 0.2 to 1.0 ppb of phenylacetaldehyde (F2);
(v) having a colorimetric lightness (L*) of $75 \leq L^* \leq 95$;
(vi) having a colorimetric chroma (C*) of $15 \leq C^* \leq 25$;
(vii) comprising raffinose (G1) and stachyose (G2) in a total amount of not smaller than 10 ppm and not greater than 100 ppm.

It is generally known that sugars present in tea beverages, when heated for sterilization or stored for a long time, undergo browning through a Maillard reaction. This change in color is significant particularly in light-colored tea with light hue as contemplated by the present invention. The present inventors found that, as a solution for this problem, incorporating specified concentrations of particular oligosaccharides in a light-colored tea beverage enhances the storage stability in terms of savor and color tone. More specifically, a tea beverage that comprises the trisaccharide raffinose (herein also referred to as "(G1)") represented by the following formula (1):

[Formula 1]

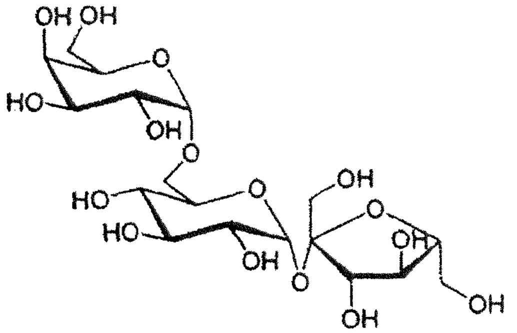

(1)

and the tetrasaccharide stachyose (herein also referred to as "(G2)") represented by the following formula (2):

[Formula 2]

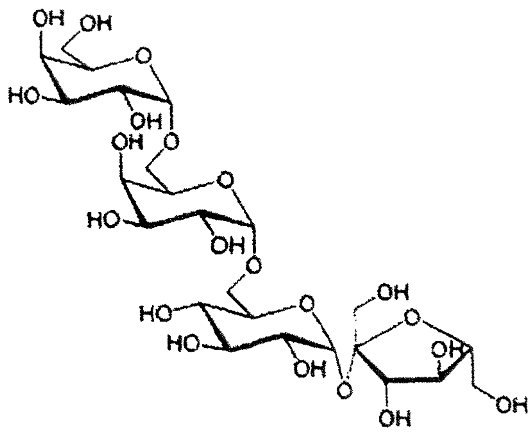

(2)

and which has a total amount by weight of raffinose and stachyose ((G1) + (G2)) of not less than 10 ppm, preferably not less than 15 ppm, more preferably not less than 20 ppm, particularly preferably not less than 30 ppm, and at most about 100 ppm, can maintain the savor and color tone of a light-colored tea beverage, and show an improvement in drinkability. As referred to herein, the "drinkability" refers to the volume of a beverage consumed on a single drinking occasion. A beverage with enhanced drinkability means that it can be gulped down in large quantities for quenching ones' thirst -- in other words, one can enjoy large quantities of the tea beverage without being sated. As referred to herein, "large quantities" specifically means that the volume of a beverage consumed by an adult male on a single drinking occasion is in the range of 350 mL to 2000 mL, preferably 500 mL to 1000 mL.

Hence, according to the present invention is a packaged green tea beverage satisfying the following requirements:

(i) comprising 100 to 800 ppm of an ascorbic acid (A);
(ii) comprising 1 to 200 ppm of valine (B1);
(iii) comprising raffinose (G1) and stachyose (G2) in a total amount of not smaller than 10 ppm and not greater than 100 ppm;
(iv) having a colorimetric lightness (L*) of $75 \leq L^* \leq 95$;
(v) having a colorimetric chroma (C*) of $15 \leq C^* \leq 25$.

(Packaged green tea beverage)

The packaged green tea beverage of the present invention can be obtained by a production method comprising the steps of, for example:

(i) subjecting green tea leaves to extraction treatment to give a liquid green tea extract,
(ii) incorporating an ascorbic acid (A) and valine (B1) in the liquid green tea extract,
(iii) preparing a liquid preparation having an adjusted lightness and chroma,
(iv) sterilizing the liquid preparation by heating, and
(v) packing the sterilized liquid preparation in a container.

Speaking of the green tea leaves to be used to produce a liquid green tea extract as a main component of the inventive green tea beverage, one or more types of green tea leaves can be selected, as appropriate, from those manufactured from tea leaves taken from the plants of the genus *Camellia,* including the varieties *C. sinensis*, *C. assamica* and *Yabukita*, and their hybrids (e.g., *Sencha*, *Bancha*, *Gyokuro*, *Tencha*, *Kamairi-cha*), and can be used alone or in combination. Extraction is done using water, hot water, or an aqueous solution containing an extraction aid. The extraction temperature is not particularly limited, but in order to allow the inventive green tea beverage to effectively give a refreshing sensation both in a visual sense and in terms of savor, it is preferred to conduct extraction at low temperatures (approximately not higher than 60°C, preferably 10 to 60°C, more preferably 15 to 55°C).
Like in the case of common beverages, the container to be used for the inventive beverage can be provided in common forms, including plastic bottles (PET bottles), metal cans, paper containers combined with metallic foils or plastic films, and glass bottles, but it is particularly preferable to use transparent containers which allow the effects of the present invention to be perceived distinctly.
In the case where the inventive beverage is to be packed in such containers as metal cans, which permit post-packaging heat sterilization, the heat sterilization is done under the sterilization conditions specified in the Food Sanitation Act. In the case where the inventive beverage is to be packed in such containers as PET bottles and paper containers, which do not permit retort sterilization, sterilization is done under the same sterilization conditions as noted above before packaging; for example, the beverage is sterilized at a high temperature for a short time using a plate-type heat exchanger or the like, and then cooled to a specified temperature and packed in such a container.

EXAMPLES

Hereunder, the present invention will be specifically described in detail by way of experimental and working examples, but the invention is not limited to these examples. The green tea beverages not falling under the scope of the claims are given for reference.

Test Example

Commercially available green tea beverages packed in PET bottles were measured for their L*, a* and b* values using a colorimeter (Spectro Color Meter SE2000; Nippon Denshoku Industries Co., Ltd.) to calculate their chroma ($C^* = (a^{*2} + b^{*2})^{1/2}$). These commercial green tea beverages were stored at 55°C for two weeks, and after the storage, were measured for their color tone (L*, a*, b* and C* values) to calculate their differential value of chroma ($\Delta C^*$) before and after storage. The storage at 55°C for two weeks was carried out for an accelerated test for long-term storage (*i.e.*, storage at room temperature for 10 months), but also served as a model for hot storage.
The results are shown in Table 1. Those tea beverages showing a change in chroma ($\Delta C^*$) of not less than 3 were found, even by visual observation, to undergo a change in color tone. It was demonstrated that green tea beverages with a chroma of $15 \leq C^* \leq 25$ show a low $\Delta C^*$ value and have stability against hot storage and long-term storage.

[Table 1]

| | Before storage | | | |
|---|---|---|---|---|
| | L* | a* | b* | C* |
| Commercial beverage A | 52.45 | -2.17 | 18.46 | 19.76 |
| Commercial beverage B | 86.95 | -6.13 | 34.17 | 34.72 |
| Commercial beverage C | 92.20 | -3.81 | 26.98 | 27.25 |
| Commercial beverage D | 93.66 | -7.99 | 30.36 | 31.39 |
| Commercial beverage E | 95.75 | -4.69 | 19.41 | 19.97 |
| Commercial beverage F | 72.65 | -3.65 | 20.89 | 21.21 |

| | After storage | | | | |
|---|---|---|---|---|---|
| | L* | a* | b* | C* | ΔC* |
| Commercial beverage A | 50.65 | -0.81 | 21.29 | 21.31 | 2.72 |
| Commercial beverage B | 81.69 | -0.70 | 38.53 | 38.54 | 3.82 |
| Commercial beverage C | 87.32 | -0.23 | 33.19 | 33.19 | 5.94 |
| Commercial beverage D | 87.49 | -1.77 | 39.98 | 40.02 | 8.63 |
| Commercial beverage E | 83.19 | -0.44 | 25.39 | 25.52 | 5.55 |
| Commercial beverage F | 71.11 | -2.75 | 22.75 | 22.92 | 1.71 |

Example 1

A commercially available green tea beverage packed in a PET bottle (Commercial beverage B used in Test Example) was diluted about 2.7 times with water, and to the mixture, a pulverized green tea leaf product (a *Matcha* powder with an average particle size of 10 μm) was added at a concentration of 4 mg/100 mL to give a green tea beverage (No. 1). To the resultant beverage, L-valine (Ajinomoto Healthy Supply Co., Inc.) was added to obtain green tea beverages with different valine concentrations (Nos. 2-7). After sterilized by heating and packed in containers, these green tea beverages were determined for their concentrations of amino acids (valine, methionine) and ascorbic acid. The analysis method was as follows.

(Determination of amino acids)

The tea beverages as samples were passed through a filter (0.45 μm) and subjected to HPLC analysis. The HPLC analysis conditions were as follows.
- HPLC system: Waters amino acid analyzer 2695
- Column: AccQ-Tag column (3.9 mm × 150 mm)
- Column temperature: 40°C
- Mobile phase A: AccQ-TagA (pH 5.8)
- Mobile phase B: Acetonitrile
- Mobile phase C: Water/methanol = 9/1
- Detection: EX, 250 nm; EM, 395 nm; Gain, 100
- Injection volume: 5 μL
- Gradient program:

| Time (min) | Flow rate (mL/min) | %A | %B | %C |
|---|---|---|---|---|
| 0 | 1 | 100 | 0 | 0 |
| 1 | 1 | 99 | 1 | 0 |
| 16 | 1 | 97 | 3 | 0 |
| 25 | 1 | 94 | 6 | 0 |

(continued)

| Time (min) | Flow rate (mL/min) | %A | %B | %C |
|---|---|---|---|---|
| 35 | 1 | 86 | 14 | 0 |
| 40 | 1 | 86 | 14 | 0 |
| 50 | 1 | 82 | 18 | 0 |
| 51 | 1 | 0 | 60 | 40 |
| 54 | 1 | 100 | 0 | 0 |
| 75 | 1 | 0 | 60 | 40 |
| 110 | 0 | 0 | 60 | 40 |

- Reference materials: Amino acids (valine, methionine)

(Sensory evaluation)

The tea beverages were subjected to a drinking test made by five panelists regarding a refreshing sensation. In this connection, the "beverage with a refreshing sensation" refers to a beverage that is light in liquid color and free of bitterness, astringency and bad smell, and gives a sensation suitable for being gulped down in large quantities (herein also referred to as "having high drinkability"). The evaluation criteria were as follows.

[Evaluation criteria]

1: excellent, 2: good, 3: moderate, 4: not good, and 5: bad. The result for each of the beverages was indicated by the rating given by the largest number of panelists.

Also, the prepared beverages, after stored at 37°C for 4 weeks, were evaluated for their color tone by visual inspection and for their savor by drinking test. The evaluation was made by five panelists under the following criteria, with each of those beverages stored at 5°C for 4 weeks being used as a control: ○: comparable to the control, Δ: slightly different from the control, ×: distinctly different from the control. The result for each of the beverages was indicated by the rating given by the largest number of panelists.

Further, after agreement was obtained from the panelists, they were asked to give an overall rating based on the results of the savor rating and the storage tests about color tone and savor which were obtained for the beverages immediately after production.

[Overall rating]

◎: very favorable, ○: favorable, Δ: moderate, ×: unfavorable

(Evaluation results)

The results are shown in Table 2. The green tea beverages (Nos. 2-7), which contained 100 to 800 ppm of an ascorbic acid (A) and 1 to 200 ppm (preferably 5 to 190 ppm) of valine (B1) based on the total amount of the beverage, and satisfied a colorimetric lightness ($L^*$) of $75 \leq L^* \leq 95$ and a chroma ($C^*$) of $15 \leq C^* \leq 25$, were preferable in that they were free of retort odor and gave a refreshing sensation both in a visual sense and in terms of savor.

It was suggested that the green tea beverages having a lightness ($L^*$) and chroma ($C^*$) adjusted to $75 \leq L^* \leq 95$ and $15 \leq C^* \leq 25$, respectively, had superior storage stability in terms of color tone. Also, the green tea beverages comprising about 1 to 200 ppm (preferably 5 to 190 ppm) of valine maintained the same refreshing sensation as they gave immediately after production.

[Table 2]

| | No.1 | No.2 | No.3 | No.4 | No.5 | No.6 | No.7 |
|---|---|---|---|---|---|---|---|
| L* | 84.75 | 84.75 | 84.75 | 84.75 | 84.75 | 84.75 | 84.75 |
| C* | 22.38 | 22.38 | 22.38 | 22.38 | 22.38 | 22.38 | 22.38 |
| Ascorbic acid (A) [ppm] | 127 | 125 | 126 | 128 | 127 | 126 | 127 |
| Valine (B1) [ppm] | 0.3 | 1 | 5 | 10 | 100 | 190 | 210 |

(continued)

| | No.1 | No.2 | No.3 | No.4 | No.5 | No.6 | No.7 |
|---|---|---|---|---|---|---|---|
| Methionine (B2) [ppm] | 3.8 | 3.8 | 3.8 | 3.8 | 3.8 | 3.8 | 3.8 |
| Savor rating | 3 | 2 | 1 | 1 | 1 | 1 | 4 |
| Storage test (Color tone) | ○ | ○ | ○ | ○ | ○ | ○ | ○ |
| Storage test (Savor) | × | Δ | ○ | ○ | ○ | ○ | Δ |
| Overall rating | × | ○ | ◎ | ◎ | ◎ | ◎ | × |

Example 2

To the light-colored tea beverage No. 4 produced in Example 1, L-methionine (Ajinomoto Healthy Supply Co., Inc.) was added to give green tea beverages with different methionine concentrations (Nos. 8 to 10). These beverages were subjected to heat sterilization, followed by component analysis and drinking tests made by five panelists in the same manner as in Example 1.

The results are shown in Table 3. It was found that there was a tendency where addition of methionine inhibited the capability of valine to increase the refreshing sensation of a light-colored tea beverage. As compared to the beverage No. 4 in terms of refreshing sensation, the beverage No. 9 was rated as not much different by three of the five panelists, but the beverage No. 10 was rated as apparently lacking in refreshing sensation by all of the panelists. This suggested that it is desirable to adjust the methionine concentration to less than 6 ppm (preferably less than 5 ppm) in the case of a light-colored tea beverage comprising a specified concentration of valine.

[Table 3]

| | No.4 | No.8 | No.9 | No.10 |
|---|---|---|---|---|
| L* | 84.75 | 84.75 | 84.75 | 84.75 |
| C* | 22.38 | 22.38 | 22.38 | 22.38 |
| Ascorbic acid (A) [ppm] | 128 | 130 | 125 | 126 |
| Valine (B1) [ppm] | 10 | 10 | 10 | 10 |
| Methionine (B2) [ppm] | 3.8 | 5.0 | 5.75 | 7.0 |
| Savor rating | 1 | 1 | 2 | 3 |
| Storage test (Color tone) | ○ | ○ | ○ | ○ |
| Storage test (Savor) | ○ | ○ | Δ | Δ |

Example 3

(1) Production of valine-rich tea leaves

Valine-rich tea leaves were produced according to the procedure described in Example 2 of Japanese Patent Application Publication No. JP 2012-183064. First, an amino acid-rich tea extract was prepared. 10 g of green tea leaves (moderately roasted) were put in a closed container quipped with an agitator, and 180 mL of ion exchange water at 40°C was added to soak the green tea leaves. To the liquid was added 0.2 g of a protease preparation ("Kokulase P" produced by Mitsubishi-Kagaku Foods Corporation), and with the temperature kept at 40°C, the mixture was stirred for 16 hours to perform enzymatic treatment. Thereafter, the resulting enzymatically treated liquid was heated at 90°C for 10 minutes to inactivate the enzyme, whereupon a liquid enzymatic extract was obtained. The thus-obtained liquid extract was analyzed for its amino acids constitution under the HPLC conditions described in Example 1. The results of the analysis are shown in Table 4. The liquid extract was concentrated under reduced pressure such that the total concentration of the 17 types of amino acids listed in Table 4 was 1%, whereby a valine-containing liquid green tea concentrate was prepared.

[Table 4]

| | | | | | | | | |
|---|---|---|---|---|---|---|---|---|
| Mg/L | Asp 51.1 | Glu 76.0 | Ser 40.1 | Gly 17.6 | His 27.1 | Arg 141.9 | Thr 41.2 | Ala 46.6 | Pro 48.8 |
| Mg/L | Theanine 175.8 | Tyr 82.2 | Val 49.8 | Met 95.2 | Ile 36.1 | Leu 112.4 | Lys 57.8 | Phe 97.4 | |

Unroasted green tea leaves (crude *Yabukita* tea leaves picked in the third round of the season) were sprayed and impregnated by stirring with the valine-containing liquid green tea concentrate at a weight ratio of tea leaves to valine-containing concentrate of 1:0.2. Thereafter, the tea leaves were dried by roasting under the following conditions to give valine-rich tea leaves.

- Roasting machine: TR-10 produced by Terada Seisakusho., Ltd.
- Drum temperature: 200°C
- Drum speed: 12 rpm
- Roasting time: 15 to 20 min
- Roasting temperature: 150°C

(2) Production of packaged green tea beverages

The valine-rich tea leaves obtained above in (1) and *Sencha* tea leaves (picked in the first round of the season) were mixed at different ratios to give three types of mixed tea leaves with different valine contents. The mixed tea leaves were subjected to extraction treatment with water (40°C) about 30 times the weight of the mixed tea leaves. To the resultant extract were added 6 mg/100 mL of a pulverized green tea leaf product (a *Matcha* powder with an average particle size of 10 μm) and 350 ppm of an ascorbic acid, and after adjustment of the pH to 6.4 using a pH adjustor, followed by heat sterilization, 500 mL each of the beverages were packed in PET bottles, whereby packaged green tea beverages (Nos. 11 to 14) were produced. The resultant green tea beverages were evaluated in the same manner as in Example 1.

The results are shown in Table 5. The green tea beverages (Nos. 2-7), which contained 100 to 800 ppm of an ascorbic acid (A) and 1 to 50 ppm of valine (B1) based on the total amount of the beverage, and satisfied a colorimetric lightness (L*) of 75 ≤ L* ≤ 95 and a chroma (C*) of 15 ≤ C* ≤ 25, were preferable in that they were free of retort odor and gave a refreshing sensation both in a visual sense and in terms of savor. In particular, the green tea beverages comprising valine (B1) at a concentration of 5 to 50 ppm, and methionine (B2) at a concentration of not less than 0.5 ppm and less than 6 ppm maintained the same refreshing sensation as they gave immediately after production, and had superior storage stability in terms of both savor and color tone.

[Table 5]

| | No.11 | No.12 | No.13 | No.14 |
|---|---|---|---|---|
| L* | 78.05 | 78.00 | 77.05 | 75.10 |
| C* | 20.09 | 19.96 | 19.76 | 18.21 |
| Valine [ppm] | 3.8 | 7.6 | 7.6 | 50 |
| Methionine [ppm] | 0.4 | 0.4 | 0.9 | 5.6 |
| Savor rating | 2 | 1 | 1 | 1 |
| Storage test (color tone) | A | A | A | A |
| Storage test (savor) | 2 | 2 | 1 | 1 |

Example 4

To a commercially available green tea beverage packed in a PET bottle (Commercial beverage F used in Test Example), a pulverized green tea leaf product (a *Matcha* powder with an average particle size of 10 μm) was added at a concentration of 5 mg/100 mL to give a green tea beverage (No. 15). To the resultant beverage, phosphoric acid was added at different concentrations to obtain green tea beverages (Nos. 16 to 20). After sterilized by heating and packed in containers, these green tea beverages were quantified for their concentrations of amino acids (valine, methionine)

and ascorbic acid in the same manner as in Example 1. These beverages were also analyzed for their concentrations of phosphoric acid and aroma components (linalol and phenylacetaldehyde) according to the procedures described below.

(Determination of phosphoric acid concentration)

The quantification of the beverages for their phosphoric acid concentration was made using an Agilent capillary electrophoresis system (HPCE).

(Determination of aroma components)

The aroma components of the tea beverages were analyzed using gas chromatography with mass spectrometry (GC/MS) and quantified using the standard addition method. Pretreatment was conducted employing the SBSE (Stir Bar Sorptive Extraction) method: stirring was performed with a Twister (a stir bar coated with polydimethylsiloxane; produced by GERSTEL K.K.) to adsorb and concentrate the components of interest. The analysis samples were adjusted as follows: sample volume: 50 mL, adsorption temperature: 25°C (room temperature), and adsorption time: 120 min. The analysis conditions were as follows.
TDS (Thermo Desorption System) conditions:

- System: GERSTEL TDS
- Desorption temperature: 35°C (1 min) to 250°C (60°C/min, held for 5 min)
- Inlet temperature: -90°C to 250°C (10°C/sec, held for 5 min)

GC/MS conditions:

- System: Agilent GC 6890, MSD 5973N
- Column: Inert Cap pure-WAX (30 m × 0.25 mm I.D. × 0.25 μm film thickness)
- Column temperature: 40°C (5 min) to 260°C (10°C/min, held for 13 min)
- Splitless: 5 min
- Column flow rate: 1.2 mL/min
- Transfer line temperature: 260°C
- Ion source temperature: 230°C
- Quadrupole temperature: 150°C
- Ion used for quantification: phenylacetaldehyde (m/z = 91)

(Sensory evaluation)

The tea beverages were subjected to a drinking test made by five panelists regarding a refreshing sensation and aroma intensity (initial aroma, retronasal aroma). The beverages were also evaluated for their storage stability in the same manner as in Example 1.

(Evaluation results)

The results are shown in Table 6. The green tea beverages having a total phosphoric acid content of 2.5 to 18 mg/100 mL (preferably 2.5 to 5.0 mg/100 mL) were free of retort odor, and gave an initial and a retronasal aroma which could be strongly perceived as an invigorating green-leaf aroma characteristic of green tea. All the panelists rated these green tea beverages as the ones which were light in liquid color and free of bitterness, astringency, and bad smell, and gave a refreshing sensation both in a visual sense and in terms of savor, which were suitable for being gulped down in large quantities. On the other hand, the beverage comprising not less than 20 mg/100 mL of phosphoric acid was intensely sour and gave no perceivable degree of invigorating green-leaf aroma.

[Table 6]

| | No.15 | No.16 | No.17 | No.18 | No19 | No20 |
|---|---|---|---|---|---|---|
| L* | 87.55 | 87.55 | 87.55 | 87.55 | 87.55 | 87.55 |
| C* | 22.31 | 22.31 | 22.31 | 22.31 | 22.31 | 22.31 |
| Ascorbic acid (A) [ppm] | 300 | 310 | 305 | 300 | 295 | 310 |

(continued)

| | No.15 | No.16 | No.17 | No.18 | No19 | No20 |
|---|---|---|---|---|---|---|
| Valine (B1) [ppm] | 7.5 | 7.5 | 7.5 | 7.5 | 7.5 | 7.5 |
| Methionine (B2) [ppm] | 1.5 | 1.5 | 1.5 | 1.5 | 1.5 | 1.5 |
| Phosphoric acid (D) [mg/100mL] | 1.9 | 2.5 | 3.0 | 5.0 | 18.0 | 25.0 |
| Linalol (F1) [ppb] | 2.8 | 2.8 | 2.8 | 2.8 | 2.8 | 2.8 |
| Phenylacetaldehyde (F2) [ppb] | 0.1 | 0.1 | 0.1 | 0.1 | 0.1 | 0.1 |
| Refreshing sensation | 1 | 1 | 1 | 1 | 1 | 2 |
| Initial aroma | 2 | 1 | 1 | 1 | 1 | 2 |
| Retronasal aroma | 2 | 1 | 1 | 1 | 2 | 2 |
| Storage test (savor) | A | A | A | A | A | B |
| Storage test (color tone) | A | A | A | A | A | A |
| Overall rating | ○ | ○ | ○ | ○ | ○ | Δ |

Example 5

To the green tea beverage No. 17 produced in Example 4, 2.2 to 107.2 ppb of linalol was added dropwise, and the resultant mixtures (Nos. 21 to 23) were analyzed for the influence of this additive on flavor. The evaluation was made by five specialized panelists under the following criteria: ○: superior to the beverage No. 17, Δ: comparable to the beverage No. 17, and ×: inferior to the beverage No. 17. The result for each of the beverages was indicated by the rating given by the largest number of panelists.

The results are shown in Table 7. The beverages containing linalol at concentrations ranging from 3 to 100 ppb showed an enhancement in aroma, gave a strongly perceivable degree of residual aroma (a lingering aroma sensed after a beverage was swallowed) and retronasal aroma, and had a further improvement in refreshing sensation.

[Table 7]

| | No.17 | No.21 | No.22 | No.23 |
|---|---|---|---|---|
| L* | 87.55 | 87.55 | 87.55 | 87.55 |
| C* | 22.31 | 22.31 | 22.31 | 22.31 |
| Ascorbic acid (A) [ppm] | 305 | 305 | 300 | 310 |
| Valine (B1) [ppm] | 7.5 | 7.5 | 7.5 | 7.5 |
| Methionine (B2) [ppm] | 1.5 | 1.5 | 1.5 | 1.5 |
| Phosphoric acid (D) [mg/100mL] | 3.0 | 3.0 | 3.0 | 3.0 |
| Linalol (F1) [ppb] | 2.8 | 5.0 | 90.0 | 110.0 |
| Phenylacetaldehyde (F2) [ppb] | 0.1 | 0.1 | 0.1 | 0.1 |
| Drinking test | - | ○ | ○ | Δ |

Example 6

To the green tea beverage No. 15 produced in Example 4 (control), phenylacetaldehyde was added to prepare green tea beverages with different phenylacetaldehyde contents (Nos. 24 to 26), and these beverages were analyzed for the influence of this additive on flavor. The evaluation was made by five specialized panelists under the following criteria: ○: superior to the beverage No. 15, Δ: comparable to the beverage No. 15, and ×: inferior to the beverage No. 15. The result for each of the beverages was indicated by the rating given by the largest number of panelists.

The results are shown in Table 8. The beverages containing phenylacetaldehyde at concentrations ranging from 0.2 to 1.0 ppb showed an enhancement in the aroma of tea without giving a feeling of strangeness, and had a further improvement in refreshing sensation.

[Table 8]

| | No.15 | No.24 | No.25 | No.26 |
|---|---|---|---|---|
| L* | 87.55 | 87.55 | 87.55 | 87.55 |
| C* | 22.31 | 22.31 | 22.31 | 22.31 |
| Ascorbic acid (A) [ppm] | 300 | 300 | 300 | 310 |
| Valine (B1) [ppm] | 7.5 | 7.5 | 7.5 | 7.5 |
| Methionine (B2) [ppm] | 1.5 | 1.5 | 1.5 | 1.5 |
| Phosphoric acid (D) [mg/100mL] | 1.9 | 1.9 | 1.9 | 1.9 |
| Linalol (F1) [ppb] | 2.8 | 2.8 | 2.8 | 2.8 |
| Phenylacetaldehyde (F2) [ppb] | 0.1 | 0.2 | 0.3 | 0.5 |
| (F1)/(F2) | 28 | 14 | 9.3 | 5.6 |
| Drinking test | - | ○ | ○ | ○ |

Example 7

To the green tea beverage No. 26 produced in Example 6, linalol was added to prepare green tea beverages with different linalol contents (Nos. 27 to 30), and these beverages were analyzed for the influence of this additive on flavor. The evaluation was made in comparison with the beverage No. 15 in the same manner as in Example 6. The results are shown in Table 9. The green tea beverages comprising 2.8 to 10 ppb of linalol (F1) and 0.2 to 1.0 ppb of phenylacetaldehyde (F2) gave a refreshing sensation both in a visual sense and when actually drunk. Also, the green tea beverages having a relative ratio of linalol (F1) to phenylacetaldehyde (F2) ((F1)/(F2)) ranging from 5 to 20 maintained their color tone and savor giving a refreshing sensation, even after storage at room temperature for a long time.

[Table 9]

| | No.26 | No.27 | No.28 | No.29 | No.30 |
|---|---|---|---|---|---|
| L* | 87.55 | 87.55 | 87.55 | 87.55 | 87.55 |
| C* | 22.31 | 22.31 | 22.31 | 22.31 | 22.31 |
| Ascorbic acid (A) [ppm] | 300 | 300 | 300 | 300 | 300 |
| Valine (B1) [ppm] | 7.5 | 7.5 | 7.5 | 7.5 | 7.5 |
| Methionine (B2) [ppm] | 1.5 | 1.5 | 1.5 | 1.5 | 1.5 |
| Phosphoric acid (D) [mg/100mL] | 1.9 | 1.9 | 1.9 | 1.9 | 1.9 |
| Linalol (F1) [ppb] | 2.8 | 5.0 | 7.5 | 10.0 | 20.0 |
| Phenylacetaldehyde (F2) [ppb] | 0.5 | 0.5 | 0.5 | 0.5 | 0.5 |
| (F1)/(F2) | 5.6 | 10 | 15 | 20 | 40 |
| Drinking test | ○ | ○ | ○ | ○ | Δ |

Example 8

To the green tea beverage No. 15 produced in Example 4 (a control beverage containing 7.0 ppm of raffinose and 2.8 ppm of stachyose), Beet Oligosaccharide (with at least 98% raffinose content; produced by Nichiei, K.K.) was added, and the resultant mixtures were sterilized by heating in the same manner as in Example 1 to prepare packaged green tea beverages with different oligosaccharide constitutions and concentrations (Nos. 31 to 33). These tea beverages were evaluated for their refreshing sensation by five panelists. The evaluation was made under the following criteria: ◎: significantly more favorable than the control, ○: more favorable than the control, Δ: comparable to the control, ×: less favorable than the control. The result for each of the beverages was indicated by the rating given by the largest number of panelists.

The results are shown in Table 10. The tea beverages comprising raffinose and stachyose in a total amount of not smaller than 10 ppm and not greater than 100 ppm did not have an offensive taste in themselves, maintained the refreshing sensation characteristic of light-colored tea beverages, and showed an enhancement in retronasal aroma and kokumi, and an improvement in drinkability.

[Table 10]

| | No.15 | No.24 | No.25 | No.26 |
|---|---|---|---|---|
| L* | 87.55 | 87.55 | 87.55 | 87.55 |
| C* | 22.31 | 22.31 | 22.31 | 22.31 |
| Ascorbic acid (A) [ppm] | 300 | 300 | 300 | 310 |
| Valine (B1) [ppm] | 7.5 | 7.5 | 7.5 | 7.5 |
| Methionine (B2) [ppm] | 1.5 | 1.5 | 1.5 | 1.5 |
| Phosphoric acid (D) [mg/100mL] | 1.9 | 1.9 | 1.9 | 1.9 |
| Raffinose (G1) [ppm] | 7.0 | 12.0 | 90.0 | 110.0 |
| Stachyose (G2) [ppm] | 2.8 | 2.8 | 2.8 | 2.8 |
| (G1)+/(G2) | 9.8 | 14.8 | 92.8 | 113.8 |
| Drinking test | - | ○ | ◎ | Δ |

## Claims

**1.** A packaged green tea beverage satisfying the following requirements:

(i) comprising 100 to 800 ppm of an ascorbic acid;
(ii) comprising 1 to 200 ppm of valine;
(iii) having a colorimetric lightness of $75 \leq L^* \leq 95$;
(iv) having a colorimetric chroma of $15 \leq C^* \leq 25$;
(v) comprising raffinose and stachyose in a total amount of not smaller than 10 ppm and not greater than 100 ppm.

**2.** The beverage according to claim 1, comprising less than 6 ppm of methionine.

**3.** The beverage according to claim 1 or 2, comprising 2.0 to 18 mg/100 mL of phosphoric acid.

**4.** The beverage according to claim 3, further comprising 3 to 100 ppb of linalol.

**5.** The beverage according to claim 1 or 2, comprising 2.8 to 10 ppb of linalol and 0.2 to 1.0 ppb of phenylacetaldehyde.

## Patentansprüche

**1.** Ein verpacktes Grünteegetränk, das die nachstehenden Voraussetzungen erfüllt:

(i) umfassend 100 bis 800 ppm einer Ascorbinsäure;
(ii) umfassend 1 bis 200 ppm an Valin;
(iii) mit einer kolorimetrischen Helligkeit von $75 \leq L^* \leq 95$;
(iv) mit einer kolorimetrischen Chroma von $15 \leq C^* \leq 25$;
(v) umfassend Raffinose und Stachyose in einer Gesamtmenge von nicht weniger als 10 ppm und nicht mehr als 100 ppm.

**2.** Das Getränk gemäß Anspruch 1, umfassend weniger als 6 ppm an Methionin.

**3.** Das Getränk gemäß Anspruch 1 oder 2, umfassend 2,0 bis 18 mg/100 mL an Phosphorsäure.

4. Das Getränk gemäß Anspruch 3, ferner umfassend 3 bis 100 ppb an Linalol.

5. Das Getränk gemäß Anspruch 1 oder 2, umfassend 2,8 bis 10 ppb an Linalol und 0,2 bis 1,0 ppb an Phenylacetaldehyd.

## Revendications

1. Boisson au thé vert conditionnée satisfaisant aux exigences suivantes :

   (i) elle comprend 100 à 800 ppm d'acide ascorbique ;
   (ii) elle comprend 1 à 200 ppm de valine ;
   (iii) elle a une valeur colorimétrique de clarté de $75 \leq L^* \leq 95$ ;
   (iv) elle a une valeur colorimétrique de saturation de $15 \leq C^* \leq 25$ ;
   (v) elle comprend du raffinose et du stachyose en une quantité totale non inférieure à 10 ppm et non supérieure à 100 ppm.

2. Boisson selon la revendication 1, comprenant moins de 6 ppm de méthionine.

3. Boisson selon la revendication 1 ou 2, comprenant 2,0 à 18 mg/100 ml d'acide phosphorique.

4. Boisson selon la revendication 3, comprenant en outre 3 à 100 ppb de linalol.

5. Boisson selon la revendication 1 ou 2, comprenant 2,8 à 10 ppb de linalol et 0,2 à 1,0 ppb de phénylacétaldéhyde.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4287583 B
- WO 2012111820 A1
- EP 2143344 A1
- EP 2095727 A1
- JP 2012183064 A


### Non-patent literature cited in the description


- Tea Research Journal. 2002, vol. 93, 26-33